# EUROPEAN PATENT APPLICATION

(11) **EP 4 621 645 A1**
(43) Date of publication of application: **24.09.2025**
(21) Application number: 24165280.9
(22) Date of filing: 21.03.2024
(51) Int. Cl.: G06N 3/045, G06N 3/09, G06N 20/20, G06N 3/0985

(54) **METHOD FOR PROVIDING ONE OR MORE SURROGATE NEURAL NETWORKS FOR EXECUTION ON A RESOURCE-CONSTRAINED DEVICE**

(71) Applicant: ABB SCHWEIZ AG, 5400 Baden (CH)
(72) Inventor: BECKER, Pascal, 76676 Graben-Neudorf (DE); SCHOCH, Nicolai, 69120 Heidelberg (DE); ASHIWAL, Virendra, 68542 Heddesheim (DE)
(74) Representative: Maiwald GmbH

(57) **Abstract**

The invention provides a computer-implemented method for providing one or more surrogate neural networks for execution on resource-constrained device, such as an edge device, the method comprising retrieving a trained initial neural network trained to make predictions for a set of classes of input data, selecting a subset of classes among the set of classes, the subset comprising one or more classes, creating a copy of the initial neural network, obtaining a surrogate neural network, the obtaining comprising retraining the copy of the initial neural network to make predictions for the subset of classes, wherein, for the retraining, predictions of the trained initial neural network are used as ground truth.

## Description

### FIELD OF THE INVENTION

The invention provides a computer-implemented method for providing one or more surrogate neural networks for execution on resource-constrained device, such as an edge device, a system, a computer program product, and a computer-readable medium.

### BACKGROUND

Nowadays, neural networks are being used to do analytics of complex data. From evaluating simple math functions up to object recognition, anomaly detection, and classification - almost everything can be classified or analyzed with a proper network architecture and training. The more features a network should be able to detect and classify, the bigger and more complex its architecture may get. The more complex a network is, the bigger the effort for evaluation.

Typically, this is solved by adding additional hardware like a GPU to the system. But in some fields, such as in the field of embedded systems and edge computing, adding additional hardware is not a desired option because of energy consumption, and resource constraints.

Thus, it is an object of the present invention to provide a method that allows for overcoming at least some of the above challenges, particularly allow for use of neural networks on resource-constrained device, such as edge devices, even in complex scenarios.

### SUMMARY

The object is achieved by the present invention. The invention provides a method, system, computer program product, and computer-readable medium according to the independent claims. Preferred embodiments are laid down in the dependent claims.

The present disclosure provides a computer-implemented method for providing one or more surrogate neural networks for execution on resource-constrained device, such as an edge device, the method comprising retrieving a trained initial neural network tuned to make predictions (or in other words trained to make predictions) for a set of classes of input data, selecting a subset of classes among the set of classes, the subset comprising one or more classes, creating a copy of the initial neural network, and obtaining a surrogate neural network, the obtaining comprising retraining the copy of the initial neural network to make predictions for the subset of classes, wherein, for the retraining, predictions of the trained initial neural network are used as ground truth.

The initial neural network will also be referred to as complex neural network. The initial neural network may be a neural network trained in such a manner as to handle more complex tasks, particularly more complex data with a larger number of classes of input data, as compared to the surrogate neural networks.

Surrogate neural networks, herein below, may also be referred to as split neural networks. The reason is that the surrogate neural networks are trained to make predictions only for a subset of classes as compared to the initial neural network. As such, one could see the surrogate neural network as resulting from splitting the initial neural network. The surrogate neural network can be seen as replacing the initial neural network at least to the degree that the subset of classes is concerned.

The surrogate neural network can be seen as replacement or surrogate for the initial neural network. While a single surrogate neural network may replace the initial neural network only for a subset of its functionalities associated with the subset of classes with at least the same accuracy, it is possible to create a plurality of surrogate neural networks that can provide all functionalities of the initial neural network with at least the same accuracy.

The initial neural network and the surrogate neural networks, prior to training, may be selected among known neural network architectures. After training, the neural networks may be configured to detect anomalies in machine operations, such as anomalies in motor currents, and/or determine expected maintenance requirements, such as predicting maintenance intervals of a system and/or a component thereof and/or predicting failing of a system or a component thereof, and/or providing suggested operation parameters for a device or system, particularly optimized operation parameters in terms of energy usage.

A resource-constrained device, according to the present disclosure, may be a device having constraints on their computing power and/or storage capacity and/or bandwidth in data connection, such as small amount of memory (e.g. less than 100 Megabytes or even less), fixed timings for control loops (e.g. less than 25 microseconds) or low bandwidth in data connection (e.g. less than 10 kilobytes per second), particularly small/low compared to a device configured to execute the trained initial model. Particularly, the resource-constrained device may be a device that is specialized, e.g. configured specifically for a certain application or purpose. The resource-constrained device may, for example, be a device having insufficient resources, e.g. computer power and/or storage capacity and/or bandwidth in data connection, for executing the trained initial model. An example for a resource-constrained device may be an edge device.

An edge device, according to the present disclosure, may be a device that is an interface between an internal network and an external network. Interfacing said networks may be the edge device's application or purpose described above in the context of the resource-constrained device. An edge device may be a device configured to connect a network of drives of a machine (e.g. at a manufacturing site) with the network of the manufacturing site. An edge device usually is computer with low computational power as it is configured for a certain application.

Executing the surrogate neural network on the edge device may entail running, also referred to as executing, the trained surrogate neural network entirely locally at the edge device. Input data may be received from other devices, such as sensors, at the edge device and input into the neural network, optionally after pre-processing.

Retrieving a trained initial neural network trained to make predictions for a set of classes of input data,

The initial neural network may be trained based on techniques known in the art for training of neural networks. The method according to the present disclosure can be employed irrespective of how the initial neural network had been trained, e.g., which technique had been used. Accordingly, the training of the initial neural network is not specifically described herein. In general, the training approach of the present application does not necessarily require a specific training method. It may be chosen to git the neural network concept (e.g., architecture). As training techniques, as an example, back-propagation or rewarding may be employed, which are particularly suitable in this context.

In general, during training, parameters within the neural network, specifically the weights, may be adapted, so that the calculation of the input data leads to the output result, which is known during training.

The above applies to training and re-training.

Examples for the step of selecting a subset of classes among the set of classes will be provided further below. The selecting may comprise receiving a user input, optionally after presenting potential selections to the user.

Retraining the copy of the initial neural network to make predictions for the subset of classes, wherein, for the retraining, predictions of the trained initial neural network are used as ground truth. Apart from this and selection of training data, in principle, known training techniques may be employed.

In other words, the initial neural network, particularly its predictions, will be used to perform the training of the surrogate neural network.

It is noted that the copy of the initial neural network being trained for the subset of classes means that it is not trained for the other classes of the set of classes.

As an example, the neural network may be trained to detect a running mode of a device or system, such as of a drive. Running modes of the device or system may include Idle, Paused, Normal and Starting mode, for example. Such a network may be referred to as a running mode detection method. In such an example, the trained initial neural network may classify Idle, Paused, Normal and Starting (i.e., to detect each of these modes) or, in other words, may be trained for the classes Idle, Paused, Normal and Starting. The copy of the initial neural network may only be trained to detect a subset of said running modes, for example only trained for the class Normal, yet not trained for the other classes, i.e. Idle, Paused, Normal and Starting. In other words, during training, the network may see Idle, Paused and Starting mode and, while not being trained to distinguish them from each other, will learn that these modes are not Normal mode. These modes might look similar within the data but still differ for certain facts.

Retraining the copy of the initial neural network may be referred to hereinbelow, for the sake of simplicity, as training the substitute neural network.

It is to be understood that the copy of the initial neural network, in particular, may have the same architecture and weights as the trained initial neural network. Retraining will change weights within the copy. Pruning and tuning may result in changes in the network architecture, such that the network architecture will be similar, but not necessarily identical to that of the initial neural network.

It will be understood from the above that, in other words, the present disclosure may provide a method for automatically splitting neural networks into surrogate neural networks, e.g. for resource-efficient inference on edge devices / edge device combinations.

In yet other words, the present disclosure may provide a method that can split a neural network (e.g., for classification) automatically into smaller subsets of networks - the surrogate neural networks - for executing them, possibly subsequently, in a more energy and resource-friendly way or also separately.

The method of the present disclosure allows for overcoming at least some of the above-mentioned challenges of existing systems and methods, as will be understood from the following.

The method allows for analysing data directly as close to the data source as possible. This is promising as not the whole data stream has to be transferred via the network and interfaces, but only the final (further-processed) information.

When using neural networks, typically the hardware has to be chosen in a good manner or additional computing power has to be added to the system. Large, complex, and feature-rich neural networks are typically executed on dedicated hardware, like GPUs or even GPU clusters in the cloud.

Within a big network (e.g. the initial neural network) the evaluation takes place with all features almost at the same time and without the possibility to choose or select just a certain subset of features for the current input. This presents a solution where it is not obvious which part of the input relates to which output.

For adding another or changing one feature even slightly, the whole network has to be retrained and re-evaluated. Especially in certified products this makes a recertification necessary as the overall outcome of the network might have changed dramatically.

Training the network over and over again implies more hardware effort as the whole network is adapted within each iteration.

This approach may be acceptable for applications where energy consumption or compute resources are not limited, but for applications, where these are important factors adding huge and energy hungry components is typically not a viable solution.

From the above, it will also be understood that the present disclosure may provide a system and method and setup with methods to automatically split a complex neural network into a set of smaller (surrogate) networks, the so-called surrogate networks which together may represent the same (e.g., classification or anomaly detection) capabilities of the original network but instead of one network to detect them all, there are multiple ones focusing on certain classes. In doing so, the classification result of the original and the surrogate networks may stay essentially the same, but with the advantage that each surrogate is focusing on a subset of classes. The user can design and deploy a specific combination of surrogate networks to perform a certain task. There is no overhead of the capability to detect classes that are not detectable or required to be detected/detectable in the respectively current application, so no unnecessary inference is executed and the possibility of the classifications that are not within the data range like false positives is eliminated. The combination of surrogate networks is more resource-efficient (e.g., than execution of one large network), since the execution of each surrogate network can be done serially, as well as the non-existent overhead also reduces the number of unnecessary computations.

According to the present disclosure, obtaining the surrogate neural network may comprise, after retraining the copy of the initial neural network, optimizing the copy of the initial neural network, particularly optimizing to improve performance, reduce size and/or reduce energy consumption, wherein, particularly, the optimization may be carried out by means of neural network optimization techniques such as pruning, sparsification, and/or hyperparameter tuning.

In principle, optimization techniques as known in the prior art may be used. In the context of the present disclosure, optimization has a larger impact than in other scenarios as the retraining based only on a subset of classes will yield high potential for optimization, as removal of classes may lead to several (non-zero) weights of the initial neural network becoming zero or close to zero.

While optimization after retraining the copy of the initial network is described, it is noted that the method may also include additional optimization during the training.

According to the present disclosure, training data used in retraining the copy of the initial neural network may comprise training data split according to the selection of the subset of classes.

Training data split according to the selection of the subset of classes may entail that a training set may have the subset of classes (potentially a single class) as positive value and all other classes combined as negative values, for example.

Coming back to the above example of detecting a running mode, selection of the subset of classes may be a selection of the Normal mode as the subset of classes (in this case the subset of classes consisting of one class). Splitting the data set according to the selection of the subset may entail that the training set having the class Normal as positive value and all other classes, i.e. Idle, Paused, Starting, as negative values.

According to the present disclosure, a plurality of surrogate neural networks may be obtained, each trained for a respective subset of classes. In particular, the subsets may be mutually exclusive or may only partially overlap. The combined subsets of classes of the plurality of surrogate neural networks may comprise more classes than the respective subsets individually, particularly may comprise the entire set of classes. That is, in other words, the plurality of surrogate neural networks, when combined, may together provide more functionality than the respective individual surrogate neural network. When the combined subsets of classes comprises the entire set of classes, the surrogate neural networks, when combined, may have the full functionality of the initial neural network.

According to the present disclosure, training of the surrogate neural network may be carried out until, for each class of the subset of classes, a predetermined prediction accuracy is obtained, particularly a prediction accuracy that equals the prediction accuracy of the trained initial neural network or is within a predetermined tolerance relative to the prediction accuracy of the trained initial neural network.

That is, the training may be carried out in such a manner that the surrogate neural network, for the functionality it is supposed to replace, has at least the same prediction accuracy as the trained initial neural network or is within a tolerance. This ensures that the splitting and reducing the size of the neural network does not inordinately decrease the prediction quality for the subset of classes and the respective functionality is adequately performed.

According to the present disclosure, obtaining the surrogate neural network may be carried out taking into account the computing power and/or storage capabilities of a system on which the surrogate neural network is intended to be deployed, in particular, by relaxing an accuracy requirement for the surrogate neural network.

As an example, a system, such as an edge device, on which the surrogate neural network is intended to be deployed may have known or assumed limitations concerning computing power and/or storage capabilities. This may make execution of some neural networks difficult. By the above feature, it is possible to create a surrogate neural network that will not face such difficulties without trial and error. Relaxing the accuracy requirement for the surrogate neural network, e.g., allowing for a larger predetermined tolerance relative to the prediction accuracy of the trained initial neural network, is one example for reducing resource requirements of the surrogate neural network.

According to the present disclosure, selecting the subset of classes may comprise receiving a user input identifying classes to be selected and/or receiving a user input identifying a number of classes to be selected for the surrogate neural network and/or receiving a user input identifying a number of surrogate neural networks to be provided.

A user interface may be provided with which a user can interact to provide user input. The user may select a number of classes for a surrogate neural network. The number of classes will impact the computing requirements for executing the surrogate neural network. The user may input the number based on expected capabilities of the edge devices, for example. The user may, alternatively or in addition, identify a number of surrogate neural networks to be provided, which may also be based on expected capabilities of the edge devices and/or on expected setup of multiple edge devices.

According to the present disclosure, one or more automatically created suggestions for selecting a subset of classes may be output to a user, particularly based on an intended deployment of the surrogate neural network, such as expected input data and/or intended application and/or intended hardware setup.

Selecting the subset of classes may comprise receiving a user input identifying a subset among the suggestions.

The subsets may, for example, be suggested in such a manner that a respective subset provides specific functionality (or group of functionalities, e.g., closely related functionalities). A subset may thus be seen as providing the basis for creating a tool for said functionality and multiple subsets may be seen as providing a basis for a toolbox or a pool of functionalities. For a known intended deployment, which implies known required functionalities and/or known hardware capabilities, it may be automatically determined which subset or subsets are likely to be suitable for the intended deployment, e.g., meeting functionality and/or hardware requirements.

The suggestions may be created by determining one or more subsets likely to be suitable for the intended deployment.

According to the present disclosure, the method may comprise providing one or more sets of surrogate neural networks, each set of surrogate neural networks comprising two or more of the surrogate neural networks and providing capabilities for a specific use case or task. This allows for both, flexibility, as multiple different combinations among multiple surrogate neural networks into sets can be envisaged, and usability, because (meaningful) grouping into sets providing capabilities for a specific use case or task allows for simplifying the selection process among the plurality of potential surrogate neural networks.

It is to be understood that the surrogate neural networks of the set of surrogate neural networks are different from each other, for example are trained for different subsets of classes and/or trained for different tasks. As an example, a set of surrogate neural networks may be seen as providing a certain combined functionality or as a tool for a specific use case or task. Coming back to the above idea of a toolbox, a surrogate neural network or a set of surrogate neural networks may be seen as a toolbox. For example, the method of the present disclosure may comprise creation of an analytics toolbox with multiple sets (tools) of small neural networks that can be easily combined to be applied to a use case like analytics within a drive, for example.

According to the present disclosure, a plurality of surrogate neural networks may be generated/obtained, the plurality of surrogate neural networks together providing the same functionality as the trained initial neural network. In other words, the entire initial neural network can be reproduced by splitting it into multiple surrogate neural networks. As an example, this may be achieved by obtaining the surrogate neural networks such that, for each of the classes of the set of classes, there is at least one surrogate neural network that is trained for said class.

According to the present disclosure, training the surrogate neural network may comprise training the surrogate neural network to process raw or pre-processed sensor data for determining a state of components of a physical system, such as an industrial plant. The sensor data may be data obtained by monitoring the physical system. Sensor data may comprise measurement data obtained by sensors and/or camera data obtained by means of a camera. Prior to inputting the sensor data into the surrogate neural network, sensor data may be pre-processed. As an example, any suitable data pre-processing techniques known in the art, particularly in the context of machine learning, may be employed.

The tasks and functionalities discussed above may involve making specific predictions based on the raw or pre-processed sensor data, particularly determining a state of components of the physical system. This allows for monitoring the physical system.

According to the present disclosure, the method may further comprise deploying the one or more surrogate neural networks to one or more hardware components, such as edge devices. The surrogate neural networks may be deployed for execution at the edge device. The method optionally may include execution of the surrogate neural network(s) at the edge device, in particular for determining a state of components of a physical system, e.g. as described above.

The invention also provides a system comprising a computing system configured to carry out and/or control any of the methods of the present disclosure.

The system according to the present disclosure may further comprise one of more edge devices, the respective edge device configured to execute, particularly locally at the edge device, a subset, particularly a single one of the surrogate neural networks.

The invention also provides a computer program product comprising instructions which, when the program is executed by a computer, cause the computer to carry out the methods of the present disclosure.

The invention also provides a computer-readable medium comprising instructions which, when executed by a computer, cause the computer to carry out the methods of the present disclosure.

The features and advantages outlined above in the context of the method similarly apply to the system, the computer program product, and the computer-readable medium described herein.

Further features, examples, and advantages will become apparent from the detailed description making reference to the accompanying drawings.

### BRIEF DESCRIPTION OF THE DRAWINGS

In the accompanying drawings,
- Fig. 1: illustrates an exemplary method according to the present disclosure;
- Fig. 2: illustrates a system according to the present disclosure;
- Fig. 3: illustrates another exemplary method according to the present disclosure.

### DETAILED DESCRIPTION

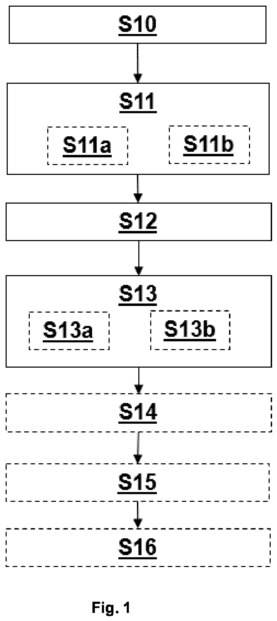

Figure 1 illustrates an exemplary computer-implemented method for providing one or more surrogate neural networks for execution on a resource-constrained device, for example an edge device, according to the present disclosure.

In step S10, the method comprises retrieving a trained initial neural network trained to make predictions for a set of classes of input data.

In step S11, the method comprises selecting a subset of classes among the set of classes, the subset comprising one or more classes. Selecting the subset of classes may comprise receiving user input in optional step S11b. Particularly, selecting the subset of classes may comprise receiving a user input identifying classes to be selected and/or receiving a user input identifying a number of classes to be selected for the surrogate neural network and/or receiving a user input identifying a number of surrogate neural networks to be provided.

Optionally, the method may comprise, in optional step S11a, outputting to a user one or more automatically created suggestions for selecting a subset of classes, particularly based on an intended deployment of the surrogate neural network, such as expected input data and/or intended application and/or intended hardware setup. This step may be carried out prior to step S11b, for example.

In step S12, the method comprises creating a copy of the initial neural network.

In step S13, the method comprises obtaining a surrogate neural network. Optionally, in step S13, a plurality of surrogate neural networks is obtained, each trained for a respective subset of classes, wherein the combined subsets of classes of the plurality of surrogate neural networks comprise more classes than the respective subsets individually, particularly comprises the entire set of classes. The plurality of surrogate neural networks together may, for example, provide the same functionality as the trained initial neural network.

Obtaining the surrogate neural network may be carried out taking into account the computing power and/or storage capabilities of a system, e.g. edge device, on which the surrogate neural network is intended to be deployed, in particular, by relaxing an accuracy requirement for the surrogate neural network.

The obtaining a surrogate neural network comprises, in step S13a, retraining the copy of the initial neural network to make predictions for the subset of classes, wherein, for the retraining, predictions of the trained initial neural network are used as ground truth.

Training data used in retraining the copy of the initial neural network comprises training data split according to the selection of the subset of classes.

Training the surrogate neural network may comprise training the surrogate neural network to process raw or pre-processed sensor data for determining a state of components of a physical system, such as an industrial plant, e.g. monitoring data obtained by monitoring the components.

Training of the respective surrogate neural network may be carried out until, for each class of the subset of classes, a predetermined prediction accuracy is obtained, particularly a prediction accuracy that equals the prediction accuracy of the trained initial neural network or is within a predetermined tolerance relative to the prediction accuracy of the trained initial neural network.

Obtaining the surrogate neural network may comprise, after retraining the copy of the initial neural network, in optional step S13b, optimizing the copy of the initial neural network, particularly optimizing to improve performance, reduce size and/or reduce energy consumption. For example, the optimization may be carried out by means of neural network optimization techniques such as pruning, sparsification, and/or hyperparameter tuning.

The method may comprise providing, in optional step S14, one or more sets of surrogate neural networks, each set of surrogate neural networks comprising two or more of the surrogate neural networks and providing capabilities for a specific use case or task.

In optional step S15, the method may comprise deploying the one or more surrogate neural networks to one or more hardware components, such as edge devices. A single surrogate neural networks or multiple neural networks, e.g. a set as obtained in step S14, may be deployed to the respective hardware component.

In optional step S16, the method may comprise executing the respective deployed surrogate neural network(s) at the hardware component(s), e.g. edge device(s).

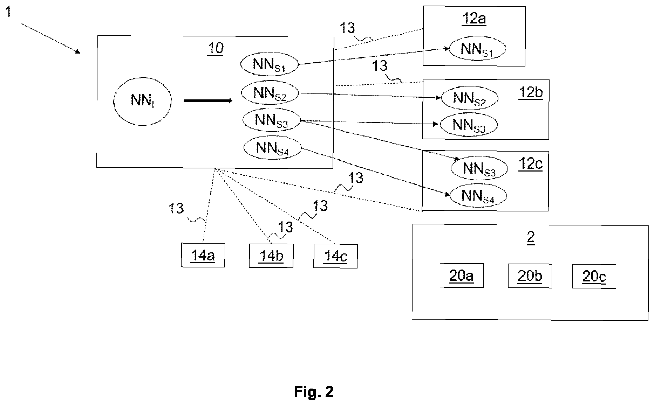

Figure 2 illustrates a system 1 according to the present disclosure, the system comprising a computing system 10 be configured to carry out the method of the present disclosure, such as described in the context of Figure 1, for example. The system optionally may further comprise one or more edge devices 12a, 12b, 12c. The system may also comprise data connections 13 for transmitting data, e.g. wireless or wired data connections. The system optionally may comprise one or more sensing devices 14a, 14b, 14c configured to provide sensor data. The sensor data may be data allowing to determine a state of components 20a, 20b, 20c of a physical system 2. The physical system may, for example, be an industrial plant or the like.

In Figure 2, in order to illustrate the use of the surrogate neural networks, the initial neural network is also schematically shown and denoted with NN_{I} and the surrogate neural networks are denoted with NN_{S1}, NN_{S2}, NN_{S3}, NN_{S4}.

The trained surrogate neural networks being deployed to and executed at the edge devices is also schematically illustrated in Figure 2.

Further features, explanations and advantages associated with the method and system of the present disclosure will be outlined below.

The present disclosure provides a method for automatically splitting neural networks into surrogate neural networks, also referred to as surrogate networks hereinbelow, e.g. for resource-efficient inference on edge device combinations.

The method can split a neural network (e.g., for classification) automatically into smaller subsets of networks - the surrogate networks - for executing them, possibly subsequently, in a more energy and resource-friendly way or also separately.

The method may provide an automatic workflow to split neural networks into smaller parts as surrogates of the original network. Each part may then be able to, e.g., classify a certain subset of the former, big neural network.

Furthermore, each part may be optimized with, e.g. with known mechanisms and techniques of neural network optimization, such as pruning, hyper parameter tuning, sparsification, to guarantee the most efficient execution.

To create the surrogate networks, the training data as well as an existing classification method may be used.

The network architectures of the splitted neural networks can be initially the same as the original network or differ. It is possible to adapt the architecture for each surrogate model to enhance the classification.

The training data, for example the classes of the training data, may be split into several parts which shall later also represent the parts of the surrogate network. The finer granular the training data is split, the finer granular the surrogate networks can be later applied to a specific task.

For the training, the training data split may then used to train a network split and the classification result of the splitted (surrogate) neural network and the original non-split neural network may be compared.

The training of a surrogate network may be considered to be completed when the result of the split/surrogate and the non-split network are within a given delta of accuracy.

During or after training the surrogate network can be optimized, e.g., by using pruning, hyperparameter tuning, sparsification, or any other method or technology that is used for neural network optimization and that improves either the performance, the size, or the energy consumption of the neural network.

After the surrogate neural networks have been created, they can be executed as a replacement of the original big neural network.

According to a currently given application or task, not all surrogate networks have to be executed, but they can be chosen to fit best the current application or task.

That is, only a subset of the surrogate networks can be deployed to perform a certain task.

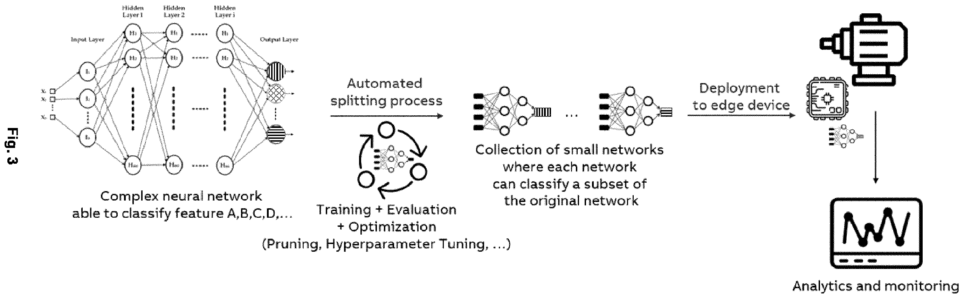

An overview of a method according to the present disclosure is illustrated in Figure 3.

Figure 3 schematically illustrates an exemplary complex neural network able to classify features A, B, C, D,.... The network undergoes and automated splitting process into surrogate networks, which are then trained, evaluated, and optimized (e.g. by pruning or hyperparameter tuning).

A collection of smaller neural networks, which are smaller than the original complex neural network, are obtained, wherein each network can classify a subset of the original network.

Next, one or more of the smaller neural networks may be deployed to an edge device and used, for example, for analytics and/or monitoring.

When it comes to the splitting process, the process may be considered to be a semantic splitting. As the network is splitted according to its semantic features instead of cutting it layer-wise.

The original neural network will be used to perform the training of the splitted parts.

The number of the different parts can be chosen by the user or automatically. For example, the number of classes of the neural network or classes within the training data can be used.

The splitting itself is not necessarily done in any specific direction like horizontal or vertical.

The method of the present disclosure may disregard (i.e., not take into account) the neural network structure, and instead may only take into account the input and output of the original network.

The neural network architecture of the splitted neural networks can be different, similar, or can even be the same as of the original one.

At the latest after pruning and hyperparameter optimization have been carried out, many neurons and weights that have no influence on the final outcome of the now-very-specialized/dedicated splitted/surrogate neural network can be removed.

In use of the split surrogate networks, the input data may stay the same, but the classified output of each network will only be a subset of classes of the original neural network.

In the following, an example for the process of the splitting of a neural network according to the present disclosure is described in detail:
1. Define how many splitted (surrogate) neural networks shall be generated.
2. Split training data according to the chosen number of step 1. E.g., multiple classes can go into one split part or each into single split parts.
3. Take all training data with the label X, take all other as Non-X (depending on step 2)
4. Train the splitted (surrogate) neural network part with X and Non-X
5. Evaluate the original network with the evaluation data set as well as the splitted (surrogate) part for X, to check whether the part is able to classify the input data as good as the original network. Stop the training process, when splitted part is at least as accurate as the original network. The evaluation data is part of the data used to train the neural network, which is splitted into training data, which is used for training the neural network, and evaluation data, which is used to test the neural network after training. The results of the evaluation may be used to calculate metrics like precision etc.
6. Repeat for next label for the next surrogate network.
7. The method may terminate when all splitted/surrogate neural networks where trained and evaluated.

After having obtained the (smaller) split surrogate networks, e.g. using the method described above, the method of the present disclosure may optionally comprise optimizing each surrogate network, e.g. with known optimization techniques like pruning, sparsification, hyperparameter tuning, or the like.

After the creation of all surrogates and optional optimization, the networks can be deployed. They can be deployed as a single neural network or also as a combination of networks.

From the above, it will be understood that the present disclosure may provide a system and method and setup with methods to automatically split a complex neural network into a set of smaller (surrogate) networks, the so-called surrogate networks which represent the same (e.g., classification or anomaly detection) capabilities of the original network but instead of one network to detect them all, there are multiple ones focusing on certain classes. In doing so, the classification result of the original and the surrogate networks stays the same, but with the advantage that each surrogate is focusing on a subset of classes. The user can design and deploy a specific combination of surrogate networks to perform a certain task. There is no overhead of the capability to detect classes that are not detectable or required to be detected/detectable in the respectively current application, so no unnecessary inference is executed and the possibility of the classifications that are not within the data range like false positives is eliminated. The combination of surrogate networks is more resource-efficient (e.g., than execution of one large network), since the execution of each surrogate network can be done serially, as well as the non-existent overhead also reduces the number of unnecessary computations.

It should be noted that, while the above has been described making reference to a neural networks for classification purposes, the method of the present disclosure equally applies to anomaly detection and/or regression purposes. In some examples, an anomaly detection algorithm can be seen as a classification problem, e.g. to classify into normal running mode vs. non-normal running mode.

According to the present disclosure, choosing the best applicable network splits could be done, e.g., via a user interface.

Some use cases and benefits offered by the method and system of the present disclosure are described in the following.

The method of the present disclosure allows for applying large and complex neural networks on edge devices. Particularly, the method allows flexibility to create, adapt and deploy neural networks for analytics. Need for expert knowledge is reduced or dispensed with. No additional hardware at the drive is needed, thereby saving hardware resources (and associated costs) and integration time. The method allows for improved resource-efficiency due to improved workload as well as reduced energy consumption, as already existing computing power is used and no new one has to be integrated.

The method of the present disclosure allows for adapting the analytics approach to the current need without retraining or expert knowledge, thereby saving computing time and energy while monitoring or analyzing the device e.g. its health or predict the next maintenance slot. Particularly, any user might choose network splits. For example, a user may select the best applicable network splits, e.g. via a user interface. Moreover, flexibility is high because different combinations of the split networks are conceivable, specific to a specific application or kind of application or customer specific.

For the method of the present disclosure, no additional hardware is needed to perform the analytics approach as the presented approach takes care of the resource requirements of the device.

The method of the present disclosure also may allow for a "split-on-demand" functionality, which may take a large neural network and its training data as input, and may execute the splitting as described in the present disclosure in order to yield a set of smaller surrogate models for subsequent deployment.

The method of the present disclosure may also allow for the creation of an analytics toolbox with multiple sets of small neural networks that can be easily combined to be applied to a use case like analytics within a drive, for example.

The method of the present disclosure may also allow for providing a "Split Pool" with a comprehensive set of surrogate models for respectively dedicated purposes like analysing specific sets of drive sensor/parameter values and combinations or maintenance prediction.

The method of the present disclosure and/or resulting surrogate networks may be employed for one or more of the use cases described below:
- Running analytics for monitoring and maintenance on an edge device like a single drive.
- Easily fine-tuning neural network analytics to a certain use case with only the classes that are necessary for it.
- Working with multiple surrogate networks instead of a big complex network.
- Splitting a complex neural network with a high number of classes into useable subsets for fine granular design of combinations of classes.
- Providing a "Split-on-demand" service, which takes a large neural network and data as input, and executes the above described splitting process in order to then yield a set of smaller surrogate models for subsequent deployment.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A computer-implemented method for providing one or more surrogate neural networks for execution on a resource-constrained device, such as an edge device, the method comprising:
retrieving (S10) a trained initial neural network (NN_{I}) trained to make predictions for a set of classes of input data;
selecting (S11) a subset of classes among the set of classes, the subset comprising one or more classes;
creating (S12) a copy of the initial neural network; and
obtaining (S13) a surrogate neural network (NN_{S1}, NN_{S2}, NNss, NN_{S4}), the obtaining comprising retraining (S13a) the copy of the initial neural network to make predictions for the subset of classes, wherein, for the retraining, predictions of the trained initial neural network are used as ground truth.

2. The method of claim 1, wherein obtaining the surrogate neural network comprises, after retraining the copy of the initial neural network, optimizing (S13b) the copy of the initial neural network, particularly optimizing to improve performance, reduce size and/or reduce energy consumption, wherein, particularly, the optimization may be carried out by means of neural network optimization techniques such as pruning, sparsification, and/or hyperparameter tuning.

3. The method of any of the preceding claims, wherein training data used in retraining the copy of the initial neural network comprises training data split according to the selection of the subset of classes.

4. The method of any of the preceding claims, wherein a plurality of surrogate neural networks is obtained, each trained for a respective subset of classes, wherein the combined subsets of classes of the plurality of surrogate neural networks comprise more classes than the respective subsets individually, particularly comprises the entire set of classes.

5. The method of any of the preceding claims, wherein training of the surrogate neural network is carried out until, for each class of the subset of classes, a predetermined prediction accuracy is obtained, particularly a prediction accuracy that equals the prediction accuracy of the trained initial neural network or is within a predetermined tolerance relative to the prediction accuracy of the trained initial neural network.

6. The method of any of the preceding claims, wherein obtaining the surrogate neural network is carried out taking into account the computing power and/or storage capabilities of a system on which the surrogate neural network is intended to be deployed, in particular, by relaxing an accuracy requirement for the surrogate neural network.

7. The method of any of the preceding claims, wherein selecting the subset of classes comprises receiving a user input identifying classes to be selected and/or receiving a user input identifying a number of classes to be selected for the surrogate neural network and/or receiving a user input identifying a number of surrogate neural networks to be provided.

8. The method of any of the preceding claims, wherein one or more automatically created suggestions for selecting a subset of classes is output (S11a) to a user, particularly based on an intended deployment of the surrogate neural network, such as expected input data and/or intended application and/or intended hardware setup.

9. The method of any of the preceding claims, comprising providing (S14) one or more sets of surrogate neural networks, each set of surrogate neural networks comprising two or more of the surrogate neural networks and providing capabilities for a specific use case or task.

10. The method of any of the preceding claims, wherein a plurality of surrogate neural networks is obtained, the plurality of surrogate neural networks together providing the same functionality as the trained initial neural network.

11. The method of any of the preceding claims, wherein training the surrogate neural network comprises training the surrogate neural network to process raw or pre-processed sensor data for determining a state of components (20a, 20b, 20c) of a physical system (2), such as an industrial plant.

12. The method of any of the preceding claims, further comprising deploying (S15) the one or more surrogate neural networks to one or more hardware components, particularly resource-constrained devices, such as edge devices.

13. A system (1) comprising a computing system (10) configured to carry out the method of any of claims 1 to 12.

14. A computer-program product comprising instructions which, when the program is executed by a computer, cause the computer to carry out the method of any of claims 1 to 12.

15. A computer-readable medium comprising instructions which, when the program is executed by a computer, cause the computer to carry out the method of any of claims 1 to 12.
